Europäisches Patentamt

European Patent Office

Office européen des brevets

(11) Publication number: **0 443 233 A1**

# EUROPEAN PATENT APPLICATION

(21) Application number: **90301931.3**

(22) Date of filing: **22.02.90**

(51) Int. Cl.⁵: **C08J 7/04, B32B 27/32**

(43) Date of publication of application:
**28.08.91 Bulletin 91/35**

(84) Designated Contracting States:
**AT BE CH DE DK ES FR GB GR IT LI LU NL SE**

(71) Applicant: **MOBIL OIL CORPORATION**
**150 East 42nd Street**
**New York New York 10017(US)**

(72) Inventor: **Chu, Shaw Chang**
**19 Saratoga Drive**
**Cranbury, New Jersey 08512(US)**
Inventor: **Kirk, Kevin Anthony**
**6025 Barberry Lane**
**Macedon, New York 14502(US)**

(74) Representative: **Colmer, Stephen Gary et al**
**Mobil Court 3 Clements Inn**
**London WC2A 2EB(GB)**

(54) Heat sealable packaging film with drawable primer.

(57) An oriented heat sealable multilayer film structure having a polyolefin film substrate, a thermoplastic primer coating on the substrate and a heat sealable acrylic or vinylidene chloride polymer coating applied to at least one primer coated surface. The primer has a glass transition from about 0° to about 50°C.

This invention related to oriented multilayer film structures, more particularly, this invention relates to oriented film, such as polypropylene film, coated with primer composition which provides superior clarity and which improves the adhesion of a heat sealable topcoat to the substrate as well as enhances the heat seal strength of the top-coated film.

Acrylic and vinylidene chloride polymers (which term includes vinylidene chloride copolymers and polyvinylidene chloride) have been used as heat sealable coatings for oriented thermoplastic films such as polypropylene film. When thermoplastic film substrates are coated with these heat sealable coatings, it is particularly important to ensure that the adhesion of the coating layer to the film substrate is adequate. In many packaging operations it is necessary for the coated film to be seat sealed to itself or to other films to form tightly closed packaging. If the coating adhesion to the base film is inadequate, the packages may prematurely open when subjected to stress.

In general, acrylic and vinylidene chloride polymer coatings do not adhere well to polypropylene film surfaces, even when the latter have been subjected to pre-treatment operations such as treatment by corona discharge, flame or oxidizing chemicals. Accordingly, it has been found necessary to apply a thin intermediate primer layer to the surface of the polypropylene base film before applying heat sealable topcoats.

Typical primers used for the acrylic and vinylidene chloride polymer coatings disclosed in the prior art include an aqueous polyethyleneimine solution for the acrylic and a water dispersed epoxy resin for the vinylidene chloride polymer coatings. The epoxy primer is not only expensive and complex to manufacture but also has a very limited shelf-life once it is made. The polyethyleneimine primer, on the other hand, has become difficult to obtain because its precursor, ethyleneimine, is a known carcinogen. In addition, polyethyleneimine has a tendency to discolor and affects the film appearance. Furthermore, all thermosetting primers are limited in their application to film which has been finally oriented: this is because their curing renders them incapable of significant stretch.

Accordingly, the present invention seeks to provide a primer coating which affords great flexibility in the time of its application so that it may be applied before orientation of the substrate layer, between machine direction and transverse direction orientation, or after biaxial orientation. This invention also seeks to provide a primer which has superior clarity and which improves the adhesion of heat sealable topcoats to a film surface and enhances the heat seal strength of coated films.

In accordance with the present invention, there is provided an oriented, preferably biaxially oriented, heat sealable multilayer film structure which comprises:

(a) a substrate layer comprising a polyolefin film;

(b) a primer coating on at least one surface of the substrate layer, the primer having a glass transition temperature (Tg) from $0^{\circ}$ to $50^{\circ}$ C;

(c) a heat sealable acrylic or vinylidene chloride polymer coating applied to at least one primer coated surface.

This invention also provides a process for the preparation of such a multilayer film structure, which process comprises for the preparation of a multilayer film structure as herein defined which process comprises: providing a substrate layer comprising a polyolefin film; orienting the substrate layer in the machine direction; applying a primer coating on at least one surface of the substrate layer, the primer having a pour transition temperature (Tg) from $0^{\circ}$ to $50^{\circ}$ C; and thereafter orienting the film structure in the transverse direction.

This invention further provides the use of a thermoplastic copolymer having a Tg from $0^{\circ}$ to $50^{\circ}$ C as primer in a biaxially oriented heat sealable multilayer film structure.

Such films demonstrate excellent properties including superior adhesion of the heat sealable topcoats to the film substrate as well as superior heat seal strength.

The polyolefins comtemplated for use in fabricating the substrate layer of the multilayer film structure of this invention include polyethylene, polypropylene, polybutene and a copolymer or a blend thereof. Particularly preferred is an isotactic polypropylene containing at least 80% by weight of isotactic polypropylene. These polypropylenes can have a melt flow rate at $446^{\circ}$ F from 1 to 25, preferably 2 to 8g/10 minutes. The crystalline melting point of these materials is from $321^{\circ}$ to $326^{\circ}$ F. The average molecular weight is from 25,000 to 100,000. Specific gravity is from 0.90 to 0.91.

An optional layer comprising an ethylene homopolymer, copolymer (including terpolymer) or a blend thereof may be interposed between at least one surface of the substrate layer (a) and the primer coating (b).

The copolymer contemplated for use herein is suitably a random copolymer of ethylene and propylene preferably comprising in from 0.5 to 10% by weight of ethylene in the resulting copolymer.

The terpolymer contemplated for use herein is suitably a polymer of low stereoregularity. The

2

terpolymers can have a melt flow rate of 446°F from 2 to 10 grams per 10 minutes and preferably from 4 to 6 grams per 10 minutes. The crystalline melting point is from less than 250°F to somewhat greater than 271°F. The terpolymers will contain a major amount of propylene, and the comonomers, such as ethylene and 1-butene, can be present in approximately from 0.3:1 to 1:1 mole percentage in relation to each other.

The preferred substrate layer is homopolypropylene having a melting point from 321°F to 336°F. A commercially available material of this description is FINA W828. For the optional layer, preferred terpolymers, such as, ethylene-propylene-butene terpolymers, have melting points of 266°F and 255°F, respectively. The materials are commercially available as Chisso XF 7500 and Chisso XF 7700. These terpolymers contain from 1 to 7 wt.% ethylene and from 1 to 7 wt.% 1-butene.

In preparing the multi-layer structure of the present invention, the substrate layer and optional layer are coextruded so that the optional layer is from 2 to 25% of the total thickness of the two layers. For some purposes, the second layer can be on both surfaces of a core layer of polypropylene in which both layers would amount to from 4 to 50% of the total thickness of the three layers. In preparing the coextruded film it has been found advantageous and convenient to recycle certain quantities of scrap extrudate back into the base homopolymer polypropylene or other polyolefin. Thus, the homopolymer polypropylene or other polyolefin can have from 0 to 30% of reclaimed material interblended therein.

The heat sealable layers, such as vinylidene chloride polymer heat sealable layers, do not adhere well to polyolefin film surfaces, especially polypropylene film surfaces, even when the latter have been subjected to well known pretreatment operations; for example, treatment by corona discharge, flame or oxidizing chemicals. The same has been found to be true in adhering the heat sealable layers contemplated herein to the surface of the substrate layer. However, it has been found that the use of a primer coating between the substrate layer and the heat sealable topcoat provides an unexpectedly high level of adherence. In addition, the primer of the present invention has superior clarify and ehnances the heat seal strength of a topcoat.

The primer composition of the present invention may be characterized by its glass transition temperature (Tg).

It has been found that the Tg of the primer should be from 0° to 50°C, preferably from 10° to 40°C, and more preferably from 15° to 30°C. A Tg which is too low, while it will allow good adhesion of the coating, will tend to be tacky and will cause blocking. A Tg which is too high will result in poor adhesion and in brittleness of the primer.

The primer is a resin consisting essentially of an interpolymer of, for example, acrylic, styrene-acrylic, or vinyl acrylic copolymer.

The interpolymer is a copolymer of (i) at least one high Tg monomer; (ii) at least one low Tg monomer; and, optionally, a small amount of a polar functional monomer such as a carboxylic acid and/or hydroxyl group-containing monomer. The high Tg and low Tg monomers together yield the preferred intermediate Tg compound.

The glass transition temperature (Tg) of a polymer may be calculated according to the following formula:

$$\frac{1}{Tg(°K)_{copolymer}} = \frac{W_1}{Tg(°K)_{monomer_1}} + \frac{W_2}{Tg(°K)_{monomer_2}} + \ldots \frac{W_n}{Tg(°K)_{monomer_n}}$$

where

$W_1$ = weight fraction of monomer$_1$

$W_2$ = weight fraction of monomer$_2$ .... up to monomer$_n$

$W_n$ = weight fraction of monomer$_n$

$Tg(°K)_{monomer\ n}$ = theoretical Tg(°C) of homopolymer n + 273°C

By a "high Tg monomer" is meant herein a monomer the homopolymer of which has a Tg above 0°C and preferably above 50°C and which, in the interpolymer, tends to raise the value of its Tg; by a "low Tg monomer" is meant herein a monomer the homopolymer of which has a Tg below 50°C and preferably below 0°C and which, in the interpolymer, tends to lower the value of its Tg.

Examples of high Tg monomers which may be employed include styrene (Tg = 373°K), ethyl methacrylate, methyl methacrylate, acrylonitrile and others.

3

Examples of low Tg monomers which may be employed include, for example, lower alkyl acrylates such as methylacrylate, ethylacrylate (Tg = 251°K) or butyl acrylates.

Examples of monomers comprising a carboxylic acid group which may be employed include acrylic acid, methacrylic acid, maleic acid, fumeric acid, itacomic acid, crotonic acid or a mixture thereof. Examples of monomers comprising a hydroxyl group include hydroxyethyl acrylate, hydroxyethyl methacrylate, hydroxypropyl acrylate, hydroxypropyl methacrylate or a mixture thereof.

The interpolymer may include from 0 to 10%, and preferably from 1 to 5% of an $\alpha,\beta$ unsaturated carboxylic acid or a mixture thereof, and from 90% to 100%, and preferably 95% to 99% by weight of the high and low Tg monomers combined in a proportion of each such as to yield a polymer with a Tg from about 0° to about 50°.

In general, the uncoated substrate films employed in the practice of the present invention are usually from 0.2 to up to 5 mils in thickness and preferably from 0.5 to 1.5 mils.

The primer of the present invention is a thermoplastic primer which enables it to be applied before or during the orientation process.

The primer is preferably applied to the film in the form of an aqueous emulsion. The primer may be applied in-line at one of three stages during the film manufacture, before film orientation, between the MD and TD orientation processes or after orientation. Application between MD and TD orientation is preferred.

The primer coating may be applied to the film in any conventional manner. For example, the primer coating may be effected by roller coating, spray coating, slot coating, or immersion coating. Preferably, the coating is applied by gravure roll coating process whereby a single or coextruded layer of a thermoplastic film, such as polypropylene, is extruded and solidified, and thereafter oriented in the MD. The primer coating composition can thereafter be roll-coated on the already MD oriented substrate polypropylene film. The coated film is subsequently oriented in the TD utilizing, for example, a tentering device. Also, the uniaxially drawn film may be subjected to a corona discharge apparatus prior to coating as is known in the art.

The primer coating is preferably applied to the substrate film as an aqueous solution and at a solids concentration within the range of 1 to 40% by weight, preferably 5 to 20% by weight. The preferred solids level is such as to yield a final dry coating weight of .01 to 1 gram/1000 square inches of film surface. Preferably the range is from about .05 to .5 g/1000 square inches. The primer coated film can be subsequently passed through a hot air oven to completely remove water or solvent.

The primer coating composition may include in addition to the major constituent, antioxidants, dyes, pigments, lubricants, anti-blocking agents and/or slip agents, that is comminuted solids which are insoluble in the coating; for example starch, talc, zinc oxide, calcium carbonate, silica, titanium oxide, triferric tetraoxide, silicates, aluminates, and alumina silicates.

A heat sealable layer is present on the primer coated film. The composition of the heat sealable layer is not critical to the practice of the invention. The heat sealable layer may be acrylic or vinylidene chloride polymer.

The heat sealable layer can, for example, be derived from any of the terpolymeric compositions disclosed in U.S. Patent No. 3,753,769. These coating compositions contain as a film forming component a resin consisting essentially of an interpolymer of (a) from 2 to 15, and preferably from 2.5 to 6, parts by weight of an alpha-beta monoethylenically unsaturated carboxylic acid selected from the group consisting of acrylic acid, methacrylic acid, and mixtures thereof, and (b) from about 85 to about 98, and preferably from about 94 to about 97.5, parts by weight of neutral monomer esters, said neutral monomer esters preferably comprising (1) methyl acrylate or ethyl acrylate and (2) methyl methacrylate. These interpolymer compositions are further characterized by preferably comprising from 30 percent to 55 percent by weight of methyl methacrylate when said alkyl acrylte is methyl acrylate, and from 52.5 percent to 69 percent by weight of methylmethacrylate when said alkyl acrylate is ethyl acrylate. Such coating compositions can be applied to the films herein in a variety of ways including in the form of ammoniacal solutions.

Similarly useful are copolymeric coating compositions prepared exclusively from the foregoing neutral monomer esters. These coating compositions are advantageously applied to the film laminates in the form of emulsions.

The heat sealable layer can also be based on any of the known and conventional vinlyidene chloride polymer compositions heretofore employed as coatings in film manufacturing operations, e.g. any of the materials described in U.S. Patent Nos. 4,214,039 and 4,447,494, with prior application of a primer layer to enhance adhesion of the coating layer to the film surface to which it is applied. Commercially available vinylidene chloride polymer latexes having vinylidene chloride content of at least 50% and preferably from 75% to 92% may be employed. The vinylidene chloride polymer can also be provided as a copolymer of vinylidene chloride and one or more other ethylenically unsaturated comonomers including alpha, beta ethylenically unsaturated acids such a acrylic and methacrylic acids; alkyl esters containing 1 to 18 carbon atoms of said acids, such as methylmethacrylate, ethyl acrylate and butyl acrylate. In addition alpha, beta ethylenically unsaturated nitriles such as acrylonitrile and methacrylonitrile and monovinyl aromatic compounds such as styrene and vinyl chloride comonomers can be employed. Specific vinylidene chloride polymer latexes contemplated comprise: 82% by weight vinylidene chloride, 14% by weight ethyl acrylate and 4% by weight acrylic acid. Alternatively, a polymer latex comprising about 80% by weight vinylidene chloride, about 17% by weight methyl acrylate and about 3% by weight methacrylic acid can likewise be employed.

The following Examples illustrte this invention.

Example 1

An aqueous styrene-acrylic copolymer emulsion with a Tg of 18°C, Adcote 61JH64A (obtained from Morton Thiokol), was diluted to 10% solids with de-ionized water. This diluted emulsion was placed in a gravure coater which had been installed between the MD orienter and the TD orienter of a pilot scale film orienter. Polypropylene resin (Fina W-472) was extruded through a flat sheet die at 250°C, cast onto a cooling drum and quenched at 30°C. The sheet measured about 35 mils thick, was reheated to 140°C and stretched 5-fold in the MD, then corona treated for improved surface wettability. The MD oriented film web, when passing through the gravure coater, was coated with the coating emulsion. The coated web was dried in preheat zones at 160°C, then stretched 8-fold in the TD at 145°C and annealed at 160°C. The dry coating weight of this primer coated, biaxially oriented film was approximately 0.1 gram per 1000 square inches of film.

The above primer coated film was placed on a gravure film coater and to the surface of the primer was applied a heat seal layer from an aqueous PVDC emulsion coating, which has a polymer composition of 78% vinylidene chloride, 19% methyl acrylate, and 3% methacrylic acid. The aqueous coating also contained 5 parts of finely divided carnauba wax and 0.5 parts of finely divided talc per 100 parts of the PVDC resin. The coating was dried to yield a coating weight of 1.75 grams per 1000 square inches of film.

Example 2

Example 1 was repeated except that the primer coated film was coated with an aqueous acrylic coating, which has a polymer composition of 54% methyl methacrylate, 42% methyl acrylate and 4% methacrylic acid. The acrylic coating also contained 40 parts colloidal silica, 5 parts carnauba wax and 0.5 parts talc per 1000 parts of the acrylic resin. The acrylic coating was dried and yielded a coating weight of about 0.6 grams per 1000 square inches of film.

Comparative Examples

The following control experiments were conducted under the same conditions as the examples above to show the clear advantage of this invention.

Example 1C

A PVDC coated film was prepared in the same manner as Example 1 except that the primer coating emulsion was not applied to the base film.

Example 2C

An acrylic coated film was prepared in the same manner as Example 2 except that the primer coating emulsion was omitted.

The above samples were evaluated by EDM heat seal test, which is a heat seal test designed to simulate conditions under which films might be sealed in a typical over-wrapping machine. See U.S. Patent No. 4,495,027 for a detailed description of this test. The heat seal strength of the above examples are compared in Table 1.

## Table 1

### ESM Seals

5 psi, 2 Sec. Dwell (g/in).

| Example | Temperature, °F | | | |
|---|---|---|---|---|
| | 230 | 250 | 270 | 290 |
| 1 | 380 | 385 | 400 | 400 |
| 1C | 215 | 215 | 245 | 215 |
| 2 | 255 | 270 | 285 | 325 |
| 2C | 125 | 130 | 140 | 160 |

## Claims

1. An oriented heat sealable multilayer film structure which comprises:
   (a) a substrate layer comprising a polyolefin film;
   (b) a primer coating on at least one surface of the substrate layer, the primer having a glass transition temperature (Tg) from 0° to 50° C;
   (c) a heat sealable acrylic or vinylidene chloride polymer coating applied to at least one primer coated surface.

2. A film structure according to claim 1 wherein the substrate layer (a) comprises polypropylene.

3. A film structure according to claim 1 or 2 wherein a layer comprising an ethylene homopolymer, copolymer (including terpolymer) or a blend thereof is interposed between at least one surface of the substrate layer (a) and the primer coating (b).

4. A film structure according to claim 3 wherein the ethylene copolymer comprises a random copolymer of ethylene and propylene.

5. A film structure according to claim 3 or 4 wherein the or each interposed layer is coextruded with substrate layer (a).

6. A film structure according to any preceding claim wherein the primer comprises a thermoplastic polymer.

7. A film structure according to any preceding claim wherein the primer comprises an interpolymer which is a copolymer of (i) at least one high Tg monomer; (ii) at least one low monomer; and, optionally, (iii) a minor amount of a polar functional monomer.

8. A film structure according to claim 7 wherein the high Tg monomer of styrene, methyl methacrylate, ethyl methacrylate or acrylonitrile.

9. A film structure according to claim 7 or 8 wherein the low Tg monomer comprises at least one alkyl acrylate.

10. A film structure according to claim 9 wherein the alkyl acrylate comprises at least one of methyl acrylate, ethyl acrylate or butyl acrylate.

11. A film structure according to any preceding claim wherein the polar functional monomer comprises a carboxylic acid and/or a hydroxyl group.

12. A film structure according to any preceding claim wherein the primer has a Tg from 10° to 40° C.

**13.** A film structure according to claim 12 wherein the primer has a Tg from 15° to 30° C.

**14.** A film structure according to any preceding claim wherein the primer is in an aqueous emulsion.

**15.** A process for the preparation of a multi layer film structure as defined in claim 1, which process comprises: providing a substrate layer comprising a polyolefin film; orienting the substrate layer in the machine direction; applying a primer coating on at least one surface of the substrate layer, the primer having a glass transition temperature (Tg) from 0° to 50° C; and thereafter orienting the film structure in the transverse direction.

**16.** A process according to claim 15, wherein the substrate layer is subjected to a corona discharge treatment prior to the application of the primer coating.

**17.** Use of a thermoplastic copolymer having a Tg from 0° to 50° C as primer in a biaxially oriented heat sealable multi layer film structure.

European
Patent Office

**EUROPEAN SEARCH
REPORT**

Application Number

**EP 90 30 1931**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 128 677 (I.C.I.)<br>* Claims 1,2,5-10; page 8, paragraph 2; page 9, lines 9-10; page 9, line 25 - page 10, line 21 * | 1-10,14 | C 08 J 7/04<br>B 32 B 27/32 |
| D,A | EP-A-0 088 535 (MOBIL OIL CORP.)<br>* Claims 1-3; page 5, lines 24-27; page 4, line 8, claim 14 *<br>* & US-A-4 447 494 | 1-6,14-16 | |
| A | EP-A-0 223 531 (THE DOW CHEMICAL CO.)<br>* Page 16, line 28; claims 1,3,5; page 19, lines 15-28 * | 1,2,6,8,9 | |
| A | DE-A-2 409 838 (BASF)<br>* Page 2, line 4 - page 3, line 21 * | 1,2,6,8,14 | |
| A | EP-A-0 079 731 (TOYO SEIKAN KAISHA LTD)<br>* Page 18, example 1 * | 1,2 | |
| A | EP-A-0 276 567 (MOBIL OIL CORP.) | | |
| A | US-A-4 439 493 (MOBIL OIL CORP.) | | TECHNICAL FIELDS SEARCHED (Int. Cl.5) |
| A | US-A-4 565 739 (MOBIL OIL CORP.) | | B 32 B<br>C 08 J |

The present search report has been drawn up for all claims

| Place of search | Date of completion of search | Examiner |
|---|---|---|
| The Hague | 18 October 90 | MCCONNELL C.H. |

CATEGORY OF CITED DOCUMENTS

X : particularly relevant if taken alone
Y : particularly relevant if combined with another
     document of the same catagory
A : technological background
O : non-written disclosure
P : intermediate document
T : theory or principle underlying the invention

E : earlier patent document, but published on, or after
     the filing date
D : document cited in the application
L : document cited for other reasons

&: member of the same patent family, corresponding
     document